# EUROPÄISCHE PATENTSCHRIFT

(11) **EP 2 220 973 B1**
(45) Veröffentlichungstag und Bekanntmachung des Hinweises auf die Patenterteilung: **21.09.2011**
(21) Anmeldenummer: 10000148.6
(22) Anmeldetag: 11.01.2010
(51) Int. Cl.: A47J 31/44

(54) **Abgabevorrichtung für Milch und/oder Milchschaum und eine Kaffeemaschine mit einer derartigen Abgabevorrichtung**
Output device for milk and/or milk foam and a coffee machine with such an output device
Dispositif de distribution pour lait et/ou mousse de lait et machine à café dotée d'un tel dispositif de distribution

(30) Priorität: 24.02.2009 EP 09405034
(43) Veröffentlichungstag der Anmeldung: 25.08.2010
(73) Patentinhaber: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(56) Entgegenhaltungen:
- EP-A- 1 656 863
- EP-B- 1 115 317
- DE-B3-102006 043 903
- DE-U1-202007 009 537
- US-A- 6 006 654

## Beschreibung

Die Erfindung bezieht sich auf eine Abgabevorrichtung für Milch und/oder Milchschaum und eine Kaffeemaschine mit einer derartigen Abgabevorrichtung.

In bekannten Abgabevorrichtungen für Milch und/oder Milchschaum wird gewöhnlich Milch mit Dampf (insbesondere Wasserdampf) und gegebenenfalls Luft gemischt, um erwärmte Milch oder Milchschaum bzw. ein Gemisch von erwärmter Milch und Milchschaum herzustellen. Derartige Abgabevorrichtungen werden häufig auch in Kaffeemaschinen integriert, zumal Kaffeemaschinen meist auch eine Einrichtung zur Erzeugung von Wasserdampf umfassen. Kaffeemaschinen mit einer integrierten Abgabevorrichtung für Milch und/oder Milchschaum ermöglichen es bekanntlich, wahlweise Kaffee (ohne Zusatz von Milch) oder erwärmte Milch (ohne Zusatz von Kaffee) oder Milchkaffee (ohne Zusatz von Milchschaum) oder Kaffeespezialitäten, die Milchschaum oder geschäumte Milch enthalten (beispielsweise Cappuccino oder Latte Macchiato), herzustellen.

Bei Abgabevorrichtungen für Milch und/oder Milchschaum, die in Verbindung mit Kaffeemaschinen Verwendung finden, wird meist mit einem Dampfstrahl in einer geeignet geformten Düse ("Venturi-Düse") ein Unterdruck erzeugt ("Venturi-Effekt"), welcher es ermöglicht, aus einem mit Milch gefüllten Vorratsbehälter (Milchbehälter) eine Portion Milch über eine Leitung zwischen der Düse und dem Vorratsbehälter anzusaugen und in die Düse zu leiten. Um lediglich erwärmte Milch (ohne Milchschaum) herzustellen, kann die angesaugte Milch in einer Kammer der jeweiligen Abgabevorrichtung mit dem in die Düse injizierten Dampf vermischt und dadurch erwärmt werden. Anschliessend kann das derart erzeugte Milch-Dampf-Gemisch in Form eines beruhigten Ausgangsstrahls aus der Abgabevorrichtung über einen Auslass in ein geeignetes Gefäss abgegeben werden. Um Milchschaum bzw. geschäumte Milch herzustellen, kann mit dem Dampfstrahl zusätzlich Luft angesaugt (beispielsweise über eine für die Umgebungsluft durchgängige Leitung) und in der Kammer mit der jeweils angesaugten Milch vermischt werden. In dieser Variante kann ein Milch-Dampf-Luft-Gemisch in Form eines beruhigten Ausgangsstrahls aus der Kammer über den Auslass in ein geeignetes Gefäss abgegeben werden, wobei sich in diesem Fall eine Mischung von erwärmter Milch und Milchschaum in dem Gefäss sammelt.

Bisher wurden mehrere auf einer Vermischung von Milch, Dampf und Luft beruhende Abgabevorrichtungen für Milch und/oder Milchschaum der vorstehend genannten Art vorgeschlagen, die es einem Benutzer erlauben, Milch und/oder Milchschaum in verschiedenen Varianten herzustellen.

Aus EP 1 115 317 B1 ist beispielsweise eine Abgabevorrichtung zur Erzeugung von Milchschaum bekannt, bei welcher ein Fluss der jeweils von einem Dampfstrahl angesaugten Milch mit einem Ventil, welches in einer Leitung zur Zufuhr von Milch angeordnet ist und eine manuell verstellbare Reglerachse zum Regulieren einer Zufuhr von Milch umfasst, durch eine manuelle Einstellung der Reglerachse vorgewählt bzw. durch eine manuelle Verstellung der Reglerachse verändert werden kann. Im vorliegenden Fall ist die Reglerachse ein verstellbarer Körper mit einer Durchgangsbohrung für die Milch. Durch eine geeignete Einstellung der Reglerachse kann ein Benutzer die mithilfe eines Dampfstrahls angesaugte Menge Milch beeinflussen bzw. begrenzen. Die jeweils angesaugte und mit der Milch vermischte Luft kann bei dieser Abgabevorrichtung nicht gezielt beeinflusst werden. Diese Abgabevorrichtung hat den Nachteil, dass die Möglichkeit, verschiedene Varianten von Milch bzw. Milchschaum herzustellen, eingeschränkt ist. Dadurch, dass lediglich die Menge der angesaugten Milch durch eine Verstellung der Reglerachse veränderbar ist, kann ein Benutzer mit dieser Abgabevorrichtung lediglich Milch aufschäumen und dabei bestenfalls die Menge und die Temperatur des erzeugten Milchschaums bzw. des erzeugten Gemischs von erwärmter Milch und Milchschaum beeinflussen. Eine Verwendung dieser Abgabevorrichtung in Verbindung mit einer Kaffeemaschine ist deshalb für einen Benutzer extrem umständlich im Hinblick auf eine Herstellung von Kaffeespezialitäten, welche auf einer Kombination von Kaffee, Milch und/oder Milchschaum beruhen, zumal der Benutzer vor der Herstellung einer bestimmten Kaffeespezialität in der Regel erst einmal die seinen Wünschen entsprechende optimale Stellung der Reglerachse des Ventils experimentell ermitteln muss. Hierfür sind in der Regel mehrere Versuche nötig. In diesem Zusammenhang ist nachteilig, dass eine manuelle Verstellung der Reglerachse in der Regel zeitaufwändig und nur ungenau reproduzierbar ist. Es ist deshalb für einen Benutzer umständlich, verschiedene Varianten von Milchschaum bzw. eines Gemischs von erwärmter Milch und Milchschaum bzw. verschiedene Varianten von Kaffeespezialitäten herzustellen.

Aus EP 1 688 074 B1 ist weiterhin eine auf einer Vermischung von Milch, Dampf und Luft beruhende Abgabevorrichtung zur Erzeugung von Milchschaum und von erwärmter Milch bekannt, bei welcher eine Einlassöffnung für Luft in einer Leitung zur Zufuhr von Luft mit einem Ventil zur Kontrolle der Luftzufuhr wahlweise geöffnet oder geschlossen werden kann. Ein Verschlusskörper des Ventils kann mit Hilfe eines Elektromotors bewegt werden, um durch Ansteuern des Elektromotors wahlweise das Ventil zu öffnen und auf diese Weise die Zufuhr von Luft zu ermöglichen oder das Ventil zu schliessen und auf diese Weise die Zufuhr von Luft zu unterbinden. Die Abgabevorrichtung weist weiterhin eine Leitung zur Zufuhr von Milch auf, wobei ein Benutzer keine Möglichkeit hat, einen Fluss von Milch durch diese Leitung zu regulieren (d.h. abzuschalten, anzuschalten bzw. zu variieren). Bei dieser Abgabevorrichtung kann deshalb ein Benutzer mit einem Dampfstrahl eine vorgegebene Menge Milch ansaugen und dabei die angesaugte Luft entweder mit dem Dampf und einer vorgegebenen Menge Luft mischen (sofern das Ventil zur Kontrolle der Luftzufuhr geöffnet ist) oder nur mit dem Dampf mischen (sofern das Ventil zur Kontrolle der Luftzufuhr geschlossen ist). Bei dieser Abgabevorrichtung hat ein Benutzer lediglich die Möglichkeit, durch Betätigung des Ventils zwei verschiedene Varianten von Milchgetränken herzustellen: eine vorgegebene Menge erwärmte Milch ohne Anteile von Milchschaum (bei geschlossenem Ventil) oder eine vorgegebene Menge geschäumte Milch mit einer vorgegebenen Konsistenz (bei geöffnetem Ventil). Auch diese Abgabevorrichtung hat deshalb den Nachteil, dass die Möglichkeit, verschiedene Varianten von Milch bzw. Milchschaum herzustellen, eingeschränkt ist. In Verbindung mit einer Kaffeemaschine bietet diese Abgabevorrichtung deshalb einem Benutzer ebenfalls wenig Wahlfreiheit bei der Herstellung von Kaffeespezialitäten, welche auf einer Kombination von Kaffee, Milch und/oder Milchschaum beruhen.

Der vorliegenden Erfindung liegt die Aufgabe zugrunde, die genannten Nachteile zu vermeiden und eine Abgabevorrichtung für Milch und/oder Milchschaum zu schaffen, welche in der Lage ist, eine grosse Anzahl verschiedener Varianten von Milchgetränken auf der Basis von Milch und/oder Milchschaum auf einfache Weise wiederholt mit jeweils vorbestimmten Eigenschaften und mit jeweils vorbestimmter Qualität reproduzierbar herzustellen. Die Abgabevorrichtung soll auch in Verbindung mit einer Kaffeemaschine verwendbar sein.

Diese Aufgabe wird gelöst durch eine Abgabevorrichtung mit den Merkmalen des Patentanspruchs 1.

Diese Abgabevorrichtung umfasst eine Mischeinrichtung zum Mischen von Dampf, Milch und/oder Luft, welche Mischeinrichtung aufweist: eine Kammer, eine erste Leitung zur Zufuhr von Milch in die Kammer, eine zweite Leitung zur Zufuhr von Dampf in die Kammer, eine dritte Leitung zur Zufuhr von Luft in die Kammer, mindestens einen Auslauf zur Abgabe der Milch und/oder des Milchschaums aus der Kammer und ein eine verstellbare Reglerachse aufweisendes Ventil zum Regulieren der Zufuhr der Milch und/oder der Luft in die Kammer, wobei durch Verstellen der Reglerachse zwischen verschiedenen vorgegebenen Stellungen zumindest ein Fluss von Milch an- und abschaltbar und/oder veränderbar und ein Fluss von Luft an- und abschaltbar und/oder veränderbar ist.

Über die erste Leitung, die zweite Leitung und die dritte Leitung können demnach Milch, Dampf und gegebenenfalls Luft in die Kammer zugeführt werden, sodass Milch, Dampf und gegebenenfalls Luft in der Kammer ein Gemisch bilden können.

Die Kammer kann beispielsweise als eine "Unterdruckkammer" ausgebildet sein. Unter "Unterdruckkammer" wird in diesem Zusammenhang eine Kammer verstanden, in der durch Zufuhr des Dampfes in die genannte Kammer ein Druck erzeugbar ist, welcher geringer ist als der Druck in der ersten Leitung und/oder der Druck in der zweiten Leitung und/oder der Druck in der dritten Leitung (Venturi Prinzip). In diesem Fall kann die Zufuhr von Dampf in der Kammer einen Unterdruck bezüglich des jeweils in der ersten Leitung herrschenden Drucks erzeugen und somit für eine Zufuhr von Milch in die Kammer sorgen. Entsprechend kann die Zufuhr von Dampf in der Kammer einen Unterdruck bezüglich des jeweils in der dritten Leitung herrschenden Drucks erzeugen und somit für eine Zufuhr von Luft in die Kammer sorgen.

Alternativ ist es möglich, die jeweiligen Leitungen mit Mitteln zu versehen, welche geeignet sind, in den jeweiligen Leitungen jeweils einen Überdruck bezüglich des in der Kammer herrschenden Druck zu realisieren und Milch, Dampf und gegebenenfalls Luft über die jeweiligen Leitungen in die Kammer einzuleiten. Zu diesem Zweck können die Leitungen beispielsweise jeweils an eine Pumpe angeschlossen werden.

Gemäss der Erfindung umfasst die Abgabevorrichtung einen Antriebsmotor zum Verstellen der Reglerachse des Ventils und eine Steuervorrichtung zum Steuern des Antriebsmotors, wobei die Reglerachse durch Steuern des Antriebsmotors mittels der Steuervorrichtung in die jeweiligen vorgegebenen Stellungen bringbar ist.

Die erfindungsgemässe Abgabevorrichtung ermöglicht es, eine Zufuhr von Dampf durch die zweite Leitung in die Kammer zu veranlassen und - abhängig von der jeweiligen Stellung der Reglerachse - Milch und/oder Luft mit jeweils unterschiedlichen Flussraten über die erste Leitung bzw. die zweite Leitung in die Kammer zu injizieren und die jeweils in der Kammer erzeugte Mischung von Dampf, Milch und/oder Luft über den Auslauf abzugeben.

Dadurch, dass durch Verstellen der Reglerachse (d.h. durch Verstellen eines einzigen Elements) sowohl der Durchfluss von Milch durch die erste Leitung als auch der Durchfluss von Luft durch die dritte Leitung veränderbar ist, ermöglicht es die Abgabevorrichtung, auf einfache Weise eine grosse Vielfalt verschiedener Mischungen von Dampf, Milch und/oder Luft zu realisieren und über den Auslauf abzugeben.

Dadurch, dass die Abgabevorrichtung einen Antriebsmotor zum Verstellen der Reglerachse des Ventils und eine Steuervorrichtung zum Steuern des Antriebsmotors aufweist und die Reglerachse durch Steuern des Antriebsmotors mittels der Steuervorrichtung in verschiedene vorgegebene Stellungen bringbar ist, ist es möglich, die Reglerachse automatisch mit einer vorbestimmten Geschwindigkeit und einer grossen Genauigkeit in die verschiedenen vorgegebenen Stellungen zu bringen und auf diese Weise die jeweils gewünschten Mischungen von Dampf, Milch und/oder Luft zu realisieren.

Die verschiedenen vorgegebenen Stellungen der Reglerachse können in der Steuerung gespeichert sein. Die Steuerung ist bevorzugt so ausgebildet, dass jede der vorgegebenen Stellungen von einem Benutzer ausgewählt und auf Befehl des Benutzers angesteuert werden kann. Demnach ermöglicht es die Abgabevorrichtung, eine grosse Anzahl verschiedener Varianten von Milchgetränken auf der Basis von Milch und/oder Milchschaum auf einfache Weise in einer beliebigen Reihenfolge, mit einer beliebigen Anzahl von Wiederholungen mit jeweils vorbestimmten Eigenschaften und mit jeweils vorbestimmter Qualität reproduzierbar herzustellen.

Die Mischeinrichtung kann auch so ausgebildet sein, dass die Milch bzw. der Milchschaum mit weiteren Zusatzstoffen, beispielsweise Schokolade und/oder Kakao, vermischt werden kann.

Die Abgabevorrichtung kann separat zur Herstellung von Milchgetränken auf der Basis von Milch und/oder Milchschaum oder in Verbindung mit Vorrichtungen zur Herstellung von anderen Getränken verwendet werden. In Verbindung mit einer Kaffeemaschine bietet diese Abgabevorrichtung einem Benutzer die Möglichkeit, eine grosse Vielfalt von Kaffeespezialitäten, welche auf einer Kombination von Kaffee, Milch und/oder Milchschaum beruhen, herzustellen.

In einer Ausführungsform der Abgabevorrichtung ist eine Antriebsachse des Antriebsmotors über eine lösbare Verbindung an die Reglerachse gekoppelt. In einer bevorzugten Variante dieser Ausführungsform ist die Mischeinrichtung nach Lösen der lösbaren Verbindung als Ganzes von den übrigen Teilen der Milchabgabevorrichtung entfernbar. Diese Massnahmen erleichtern es, die Abgabevorrichtung und insbesondere die Mischeinrichtung zu reinigen, um beispielsweise die Abgabevorrichtung bzw. die Mischeinrichtung nach einer Benutzung von Milchrückständen zu befreien und so die üblichen hygienischen Standards einhalten zu können.

Die erfindungsgemässe Abgabevorrichtung kann beispielsweise in Kombination mit einer Kaffeemaschine verwendet werden und zu diesem Zweck in der Umgebung eines Kaffeeauslaufkopfes der jeweiligen Kaffeemaschine angeordnet werden. Unter "Kaffeeauslaufkopf" wird in diesem Zusammenhang eine Baugruppe verstanden, die zumindest einen Auslauf oder mehrere Ausläufe zur Abgabe eines Kaffeegetränks und eine Tragstruktur, welche die jeweiligen Ausläufe an einer vorgegebenen Position an der Kaffeemaschine hält, umfasst.

Die Abgabevorrichtung kann vorzugsweise derart an einer Kaffeemaschine angeordnet werden, dass die Mischeinrichtung an einer Aussenseite eines Gehäuses der Kaffeemaschine angeordnet ist. Dies hat den Vorteil, dass alle Leitungen, welche Milch (beispielsweise aus einem Vorratsbehälter für Milch) zur Mischeinrichtung führen, ausschliesslich an der Aussenseite des Gehäuses der Kaffeemaschine angeordnet werden können, so dass keine Milch in den vom Gehäuse umgrenzten Innenraum der Kaffeemaschine geführt werden muss. Auf diese Weise kann vermieden werden, dass Milchrückstände im Innenraum der Kaffeemaschine entstehen können. Alle Leitungen, welche die Milch zur Mischeinrichtung führen, sind deshalb leicht zugänglich und können mit wenig Aufwand kontrolliert und gegebenenfalls entfernt, ausgetauscht oder gereinigt werden.

In einer weiteren Variante der vorstehend genannten Kaffeemaschine ist der Kaffeeauslaufkopf an der Aussenseite des Gehäuses der Kaffeemaschine angeordnet und die Abgabevorrichtung am Kaffeeauslaufkopf befestigt. In diesem Fall bilden der Kaffeeauslaufkopf und die Abgabevorrichtung eine kompakte Einheit. Der jeweilige Kaffeeauslaufkopf und die Abgabevorrichtung werden bevorzugt derart nahe beieinander angeordnet, dass ein vom Kaffeeauslaufkopf abgegebenes Kaffeegetränk und die jeweils von der Abgabevorrichtung abgegebene Milch bzw. der jeweils von der Abgabevorrichtung abgegebene Milchschaum gleichzeitig oder zeitlich nacheinander in dasselbe Gefäss laufen können, ohne die Position des Gefässes relativ zum Kaffeeauslaufkopf oder relativ zur Abgabevorrichtung verändern zu müssen.

In einer weiteren Variante der vorstehend genannten Kaffeemaschine umfasst der Kaffeeauslaufkopf ein Gehäuse, in welchem die Mischeinrichtung untergebracht ist. Dies hat den Vorteil, dass die Mischeinrichtung vor Verschmutzung geschützt ist und ein Benutzer daran gehindert werden kann, die Mischeinrichtung im Betrieb der Kaffeemaschine zu berühren. Letzteres verhindert insbesondere unbeabsichtigte Berührungen der mit heissem Dampf beaufschlagten Teile der Mischeinrichtung und schützt somit einen Benutzer vor Verbrennungen der Haut.

In einer bevorzugten Ausführungsform ist der Kaffeeauslaufkopf derart an der Kaffeemaschine angeordnet, dass die Mischeinrichtung von der Aussenseite des Gehäuses der Kaffeemaschine her zugänglich und als Ganzes von der Kaffeemaschine separierbar ist. Dies hat den Vorteil, dass die Mischeinrichtung nach Gebrauch leicht entfernt und gereinigt werden kann.

In einer weiteren Ausführungsform ist die Abgabevorrichtung relativ zum Gehäuse der Kaffeemaschine derart platziert, dass der Antriebsmotor im Innern des Gehäuses der Kaffeemaschine angeordnet ist und die Antriebsachse des Antriebsmotors und/oder die Reglerachse und/oder ein die Antriebsachse und die Reglerachse verbindendes Getriebe oder eine die Antriebsachse und die Reglerachse verbindende Kupplung durch eine Öffnung im Gehäuse der Kaffeemaschine ragt. Diese Variante hat den Vorteil, dass einerseits der Antriebsmotor durch das Gehäuse verdeckt und geschützt ist und andererseits die Mischeinrichtung ausserhalb des Gehäuses platziert sein kann. Somit beansprucht die Abgabevorrichtung ausserhalb des Gehäuses weniger Platz, wobei die Mischeinrichtung von der Aussenseite des Gehäuses der Kaffeemaschine zugänglich bleibt und deshalb leicht zugänglich ist und mit wenig Aufwand kontrolliert und gegebenenfalls entfernt, ausgetauscht oder gereinigt werden kann.

In einer weiteren Variante der vorstehend genannten Kaffeemaschinen sind der Kaffeeauslaufkopf und die Abgabevorrichtung relativ zum Gehäuse der Kaffeemaschine bewegbar angeordnet, wobei eine Höhenlage des Kaffeeauslaufkopfes und eine Höhenlage der Abgabevorrichtung simultan veränderbar sind. Dadurch können die jeweiligen Höhenlagen des Kaffeeauslaufkopfes und der Abgabevorrichtung auf einfache Weise gemeinsam optimal an die Höhe des jeweiligen Gefässes angepasst werden, in welches Kaffee bzw. Milch und/oder Milchschaum aus dem Kaffeeauslaufkopf bzw. der Abgabevorrichtung ausgegeben werden soll.

Weitere Einzelheiten der Erfindung und insbesondere beispielhafte Ausführungsformen der erfindungsgemässen Abgabevorrichtung für Milch und/oder Milchschaum werden im Folgenden anhand der beigefügten Zeichnungen erläutert. Es zeigen:
- Fig. 1: eine Kaffeemaschine mit einem Kaffeeauslaufkopf in Kombination einer Abgabevorrichtung für Milch und/oder Milchschaum gemäss der Erfindung, wobei die Abgabevorrichtung teilweise in einem Gehäuse des Kaffeeauslaufkopfes untergebracht ist;
- Fig. 2: die Abgabevorrichtung und das Gehäuse des Kaffee- auslaufkopfes gemäss Fig. 1, in einem vertikalen Schnitt;
- Fig. 3: die Abgabevorrichtung und der Kaffeeauslaufkopf gemäss Fig. 1 in einem horizontalen Schnitt.

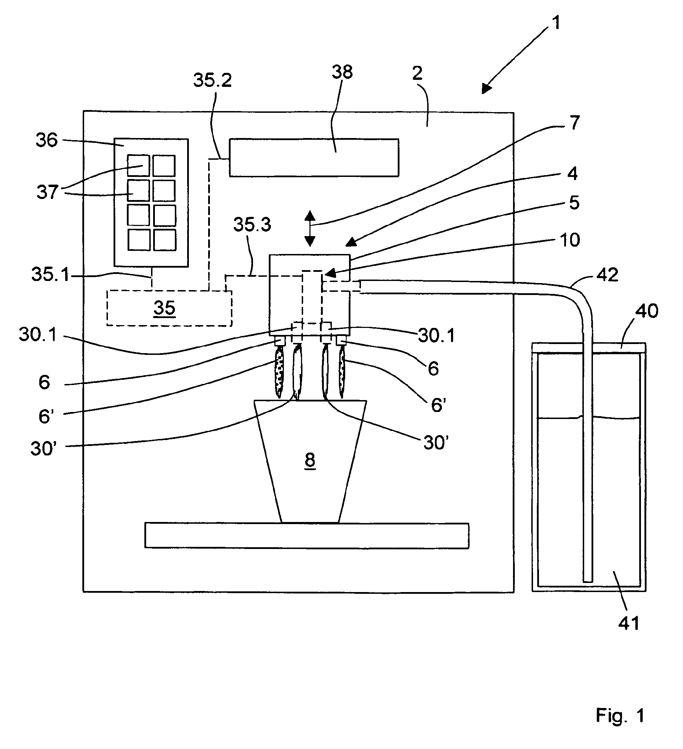

Fig. 1 zeigt eine Frontansicht einer Kaffeemaschine 1, welche zur Bereitung einer Vielzahl verschiedener Getränke und zu diesem Zweck insbesondere zur Bereitung von Kaffee, erwärmter Milch und geschäumter Milch und zur Bereitung von Kaffeespezialitäten, welche gegebenenfalls Milch und/oder Milchschaum enthalten, ausgelegt ist. An der Vorderseite eines Gehäuses 2 der Kaffeemaschine 1 ist ein Kaffeeauslaufkopf 4 zur Abgabe eines Kaffeegetränks angebracht. Im vorliegenden Beispiel umfasst der Kaffeeauslaufkopf 4 zwei Kaffeeausläufe 6 zur Abgabe eines Kaffeegetränks und ein mit den Kaffeeausläufen 6 verbundenes Gehäuse 5. Die Kaffeeausläufe 6 und das Gehäuse 5 sind höhenverstellbar angeordnet und zu diesem Zweck (mittels in den Fig. 1-3 nicht dargestellten Führungsmitteln) am Gehäuse 2 der Kaffeemaschine 1 in Richtung einer Vertikalen geführt, wie in Fig. 1 durch einen Doppelpfeil 7 angedeutet ist. Auf diese Weise ist es möglich, die Höhenlage des Kaffeeauslaufkopfes 4 relativ zu einem Gefäss 8, welches zur Aufnahme eines über die Kaffeeausläufe 6 abgegebenen Kaffeegetränks vorgesehen ist und zu diesem Zweck unterhalb der Kaffeeausläufe 6 platziert ist, geeignet anzupassen. Wie in Fig. 1 dargestellt, verlässt das jeweils abgegebene Kaffeegetränk den jeweiligen Kaffeeauslauf 6 in Form eines Kaffeestrahls 6'.

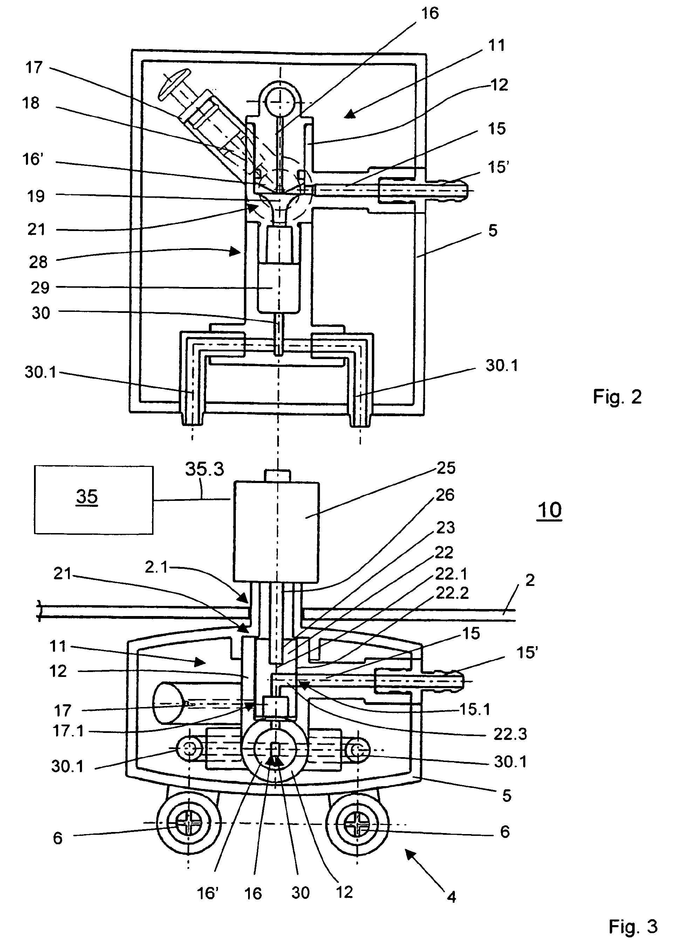

An der Vorderseite des Gehäuses 2 der Kaffeemaschine 1 ist weiterhin eine erfindungsgemässe Abgabevorrichtung 10 für Milch und/oder Milchschaum angeordnet. Im vorliegenden Beispiel ist die Abgabevorrichtung 10 am Kaffeeauslaufkopf 4 befestigt und zumindest teilweise von dem Gehäuse 5 des Kaffeeauslaufkopfes 4 umschlossen, wie im Folgenden im Zusammenhang mit Fig. 3 noch näher erläutert wird. Da die Abgabevorrichtung 10 am Kaffeeauslaufkopf 4 befestigt ist, ist die Abgabevorrichtung 10 zusammen mit dem Kaffeeauslaufkopf 4 relativ zum Gefäss 8 höhenverstellbar.

Wie Fig. 1 zeigt, ist im Innern der Kaffeemaschine 1 eine Steuervorrichtung 35 untergebracht, welche alle von der Kaffeemaschine ausführbaren Prozesse steuert, insbesondere die Bereitung und Abgabe der jeweils gewünschten Kaffeegetränke und die Abgabe von Milch und/oder Milchschaum. Die an der Bereitung und der Abgabe der jeweiligen Kaffeegetränke beteiligten Komponenten der Kaffeemaschine 1 sind in Fig. 1-3 (abgesehen vom Kaffeeauslaufkopf 4) nicht dargestellt.

Die Kaffeemaschine 1 kann im Betrieb von einem Benutzer mithilfe eines am Gehäuse 2 angeordneten Bedienfeldes 36 bedient werden, welches mehrere (im vorliegenden Beispiel acht) manuell betätigbare Tasten 37 umfasst und mit der Steuervorrichtung 35 über eine Leitung 35.1 zur Übermittlung von Daten und/oder Steuersignalen verbunden ist. Jeder einzelnen Taste 37 ist ein spezifischer, von der Kaffeemaschine ausführbarer Prozess zugeordnet. Durch betätigen der jeweiligen Tasten 37 kann ein Benutzer insbesondere aus einer vorgegebenen Liste mehrerer verschiedener Getränke, die mittels der Kaffeemaschine 1 zubereitbar sind, das jeweils gewünschte Getränk auswählen und die Zubereitung dieses Getränks veranlassen.

Die Steuervorrichtung 35 ist weiterhin über eine Leitung 35.2 zur Übermittlung von Daten und/oder Steuersignalen mit einer Anzeige 38 verbunden, um durch eine Übermittlung entsprechender Daten und/oder Steuersignalen eine Wiedergabe von Informationen über den jeweiligen Betriebszustand der Kaffeemaschine mittels der Anzeige 38 veranlassen zu können.

Wie Fig. 1 weiterhin andeutet, ist die Steuervorrichtung 35 über eine Leitung 35.3 zur Übermittlung von Daten und/oder Steuersignalen mit der Abgabevorrichtung 10 für Milch und/oder Milchschaum verbunden, um eine Abgabe von Milch und/oder Milchschaum steuern zu können (wie im Zusammenhang mit den Fig. 2 und 3 noch näher erläutert wird).

Im vorliegenden Beispiel ist ein Behälter 40, welcher einen Milchvorrat 41 enthält, neben der Kaffeemaschine 1 angeordnet. Um die Herstellung eines Milch und/oder Milchschaum enthaltenden Getränks zu ermöglichen, ist die Abgabevorrichtung 10 mit dem Behälter 40 über einen in den Milchvorrat 41 eintauchenden Schlauch 42 verbunden. Bei Bedarf kann - veranlasst durch die Steuervorrichtung 35 - eine Portion Milch aus dem Milchvorrat 41 über den Schlauch 42 angesaugt und auf diese Weise für eine Zufuhr von Milch zur Abgabevorrichtung 10 gesorgt werden. Wie Fig. 1 andeutet, verfügt die Abgabevorrichtung 10 über zwei Ausläufe 30.1, über welche Milch und/oder Milchschaum in Form eines Milch- bzw. Milchschaum-Strahls 30' aus der Abgabevorrichtung 10 abfliessen kann, beispielsweise in das Gefäss 8 (Fig. 1). So ist es möglich gleichzeitig zwei Gefässe 8 auf gleiches Füllniveau zu befüllen.

Der Schlauch 42 bzw. ein in den Milchvorrat 41 eintauchender Abschnitt des Schlauches 42 kann auch durch eine Lanze bzw. eine Rohrleitung ersetzt werden. Der Behälter 40 kann mit Kühlvorrichtung (zum Kühlen des Behälters 40 bzw. zum Kühlen des Milchvorrats 41) und mit einer thermischen Isolierung (gegenüber der Umgebung des Behälters 40) ausgestattet sein, um den Milchvorrat 41 frisch halten zu können.

Wie Fig. 1 andeutet, verläuft der Schlauch 42 an einer Aussenseite des Gehäuses direkt zu der Abgabevorrichtung 10. Die Abgabevorrichtung ist im vorliegenden Beispiel ebenfalls derart angeordnet, dass die der Abgabevorrichtung 10 zugeführte Milch nicht in das Innere der Kaffeemaschine 1 geführt werden muss. Auf diese Weise ist ausgeschlossen, dass Milchrückstände im Innenraum der Kaffeemaschine 1 entstehen können. Alle Teile, welche mit der Milch in Berührung kommen, sind deshalb leicht zugänglich und können mit wenig Aufwand kontrolliert und gegebenenfalls entfernt, ausgetauscht oder gereinigt werden.

Anhand der Fig. 2 und 3 werden im Folgenden weitere Einzelheiten der Abgabevorrichtung 10 erläutert.

Wie aus den Fig. 2 und 3 hervorgeht, umfasst die Abgabevorrichtung 10 u.a. eine Mischeinrichtung 11 zum Mischen von Dampf, Milch und/oder Luft. Die Mischeinrichtung 11 umfasst ein Gehäuse 12, in welchem angeordnet bzw. ausgebildet sind:
- eine Kammer 19,
- eine erste Leitung 15 zur Zufuhr von Milch in die Kammer 19,
- eine zweite Leitung 16 zur Zufuhr von Dampf in die Kammer 19,
- eine dritte Leitung 17 zur Zufuhr von Luft in die Kammer 19,
- eine Auslaufeinrichtung 28 für Milch und/oder Milchschaum, welche eine mit der Kammer 19 verbundene Emulsionskammer 29 zur Aufnahme eines in der Kammer 19 erzeugten Gemischs aus Dampf, Milch und/oder Luft und eine Bohrung 30 für den Austritt von Milch und/oder Milchschaum aus der Emulsionskammer 29 (bzw. der Mischeinrichtung 11) aufweist, wobei die Bohrung 30 im vorliegenden Beispiel in die beiden Ausläufe 30.1 für die Milch und/oder den Milchschaum mündet, und
- ein eine verstellbare Reglerachse 22 aufweisendes Ventil 21 zum Regulieren der Zufuhr der Milch und/oder der Luft in die Kammer 19.

Die erste Leitung 15 kann über einen Adapter 15' mit dem Schlauch 42 verbunden werden, um eine Zufuhr von Milch aus dem Behälter 40 zu gewährleisten.

Die zweite Leitung 16 ist mit einem (in Fig. 1-3 nicht dargestellten) Dampferzeuger der Kaffeemaschine 1 verbunden, um gegebenenfalls Dampf in die zweite Leitung einleiten zu können.

Wie Fig. 2 andeutet, ist die dritte Leitung 17 an dem von der Kammer 19 entfernten Ende offen und ermöglicht an diesem Ende den Eintritt von Umgebungsluft in die Leitung 17. Die dritte Leitung ist allerdings mit einem Rückschlagventil 18 (beispielsweise in Form eines Membranventils) versehen, um zu gewährleisten, dass einerseits Umgebungsluft durch ein im Rückschlagsventil 18 ausgebildetes (die Zufuhr von Luft begrenzendes) Luftloch in die dritte Leitung 17 und somit in die Kammer 19 der Mischeinrichtung 11 eindringen kann, andererseits aber verhindert wird, dass die der Mischeinrichtung 11 zugeführte Milch über die dritte Leitung 17 entweichen und gegebenenfalls das genannte Luftloch verschmutzen und somit die Zufuhr von Luft über die dritte Leitung 17 unkontrollierbar beeinträchtigen kann.

Wie Fig. 2 andeutet, mündet die zweite Leitung 16 im vorliegenden Beispiel in die Kammer 19 über eine Düse 16', welche derart geformt ist, dass Dampf, welcher aus der Leitung 16 über die Düse 16' in die Kammer 19 einströmt, in der Kammer 19 (gemäss dem Venturi-Effekt) einen Unterdruck erzeugt. Da die erste Leitung 15 (für Milch) und die dritte Leitung 17 (für Luft) ebenfalls über die Kammer 19 in die Auslaufeinrichtung 28 münden, verursacht ein in die Kammer 19 über die zweite Leitung 16 injizierter Dampfstrahl eine Sogwirkung in der ersten Leitung 15 und in der dritten Leitung 17 und sorgt dafür, dass (ohne Mitwirkung weiterer Pumpen) Milch über die erste Leitung 15 und gegebenenfalls Luft über die dritte Leitung 17 in die Kammer 19 gesaugt und dort mit dem Dampf vermischt bzw. verwirbelt werden können, um die Milch zu erwärmen (falls keine Luft über die dritte Leitung 17 zugeführt wird) oder die Milch durch eine Verwirbelung mit Luft aufzuschäumen und ein Gemisch aus erwärmter Milch und Milchschaum herzustellen (falls Luft über die dritte Leitung 17 zugeführt wird).

Die Reglerachse 22 des Ventils 21 ist im vorliegenden Fall als ein zylindrischer Körper ausgebildet, welcher an Innenwänden des Gehäuses 11 derart gelagert ist, dass die Reglerachse 22 um ihre Längsachse 22.1 drehbar ist und somit durch Drehungen um die Längsachse 22.1 verstellt werden kann.

Wie Fig. 3 entnehmbar ist, münden die erste Leitung 15 und die dritte Leitung 17 unmittelbar an einer äusseren Mantelfläche 22.2 der Reglerachse 22 in den Innenraum des Gehäuses 12, wobei in Fig. 3 das Bezugszeichen 15.1 die entsprechende Mündung der ersten Leitung 15 und das Bezugszeichen 17.1 die entsprechende Mündung der dritten Leitung 17 bezeichnet. Demgemäss kann die Reglerachse 22 die Mündung 15.1 und/oder die Mündung 17.1 verschliessen und somit eine Zufuhr von Milch über die erste Leitung 15 in die Kammer 19 und/oder eine Zufuhr von Luft über die dritte Leitung 17 in die Kammer 19 verhindern, wenn nicht in der Reglerachse 22 ausgebildete Kanäle eine durchgängige Verbindung zwischen der ersten Leitung 15 und der Kammer 19 bzw. zwischen der dritten Leitung 17 und der Kammer 19 herstellen.

Um zu ermöglichen, dass eine Zufuhr von Milch in die Kammer 19 durch Verstellen der Reglerachse 22 (d.h. durch eine Drehung um die Längsachse 22.1 um einen bestimmten Drehwinkel) regulierbar ist, ist in der Reglerachse ein Kanal 22.3 ausgebildet, der zur äusseren Mantelfläche 22.2 der Reglerachse 22 hin geöffnet ist und an der Mündung 15.1 einen Durchgang zwischen der ersten Leitung 15 und Kammer 19 bildet, wobei der Querschnitt dieses Durchgangs von der jeweiligen (Winkel-) Stellung der Reglerachse 22 abhängig ist. Im Beispiel gemäss Fig. 3 überlappen der Kanal 22.3 und die erste Leitung 15 an der Mündung 15.1 derart, dass der Querschnitt des Durchgangs zwischen der ersten Leitung 15.1 und der Kammer 19 maximal ist und somit eine Zufuhr von Milch durch den Kanal 22.3 mit maximaler Flussrate ermöglicht wird. Bei einer Drehung der Reglerachse 22 um die Längsachse 22.1 um einen bestimmten Drehwinkel kann der Querschnitt des Durchgangs zwischen der ersten Leitung 15 und der Kammer 19 verändert und insbesondere um ein vorgegebenes Mass reduziert werden, dessen Grösse von der Form und der Anordnung des Kanals 22.3, von der Form und der Anordnung der ersten Leitung 15 und dem jeweiligen Drehwinkel abhängt. Dementsprechend kann durch Verstellen der Reglerachse 22 zwischen verschiedenen vorgegebenen Stellungen ein Fluss von Milch durch die erste Leitung 15 in die Kammer 19 verändert und gegebenenfalls an- und abgeschaltet werden.

Auf analoge Weise ist in der Reglerachse 22 ein weiterer (in Fig. 1-3 nicht dargestellter) Kanal ausgebildet, welcher einen Durchgang zwischen der dritten Leitung 17 und der Kammer 19 schafft, dessen Querschnitt als Funktion des Drehwinkels der Reglerachse 22 veränderbar ist. Dementsprechend kann ein Fluss von Luft durch die dritte Leitung 17 in die Kammer 19 durch Verstellen der Reglerachse 22 zwischen verschiedenen vorgegebenen Stellungen verändert und gegebenenfalls an- und abgeschaltet werden.

Wie Fig. 3 zeigt, ist die Abgabevorrichtung 10 mit einem Antriebsmotor 25 (beispielweise einem Schrittmotor) ausgestattet, welcher mittels der Steuervorrichtung 35 über die Leitung 35.3 ansteuerbar ist und dazu dient, die Reglerachse 22 des Ventils 21 um die Längsachse 22.1 unter Kontrolle der Steuervorrichtung 35 zu drehen und dadurch zu verstellen.

Der Antriebsmotor 25 weist eine Antriebsachse 26 auf, welche axial zur Längsachse 22.1 der Reglerachse 22 angeordnet ist. Die Antriebsachse 26 ist bevorzugt lösbar an die Drehachse 22.1 gekoppelt, um die Mischeinrichtung 11 auf möglichst einfache Weise von dem Kaffeeauslaufkopf 4 bzw. der Kaffeemaschine 1 separieren zu können. Im vorliegenden Beispiel weist die Reglerachse 22 an einem Ende eine axiale Bohrung 23 auf, in welche die Antriebsachse 26 in Richtung der Längsachse 22.1 formschlüssig einführbar ist. Um eine Kopplung zwischen der Antriebsachse 26 und der Reglerachse 22 zu realisieren, wird die Mischeinrichtung 11 derart auf die Antriebsachse 26 aufgesetzt, dass ein Ende der Antriebsachse 26 in die Bohrung 23 ragt. Um die Stabilität der Kopplung zu verbessern, kann die Reglerachse 22 gegebenenfalls mit (in Fig. 1-3 nicht dargestellten) Befestigungsmitteln an der Antriebsachse 22 fixiert werden.

Das Ventil 21 ist derart ausgebildet, dass durch ein Verdrehen (Verstellen) der Reglerachse 22 zwischen mehreren vorgegebenen Stellungen sowohl die Zufuhr von Milch durch die erste Leitung 15 als auch die Zufuhr von Luft durch die dritte Leitung 17 variiert werden kann. Auf diese Weise können Milch und Luft in unterschiedlichen Mengen gemischt werden, wobei das Mischungsverhältnis zwischen Milch und Luft über einen grossen Bereich (beispielsweise zwischen 100% und 0%) variiert werden kann.

Die jeweiligen vorgegebenen Stellungen sind in der Steuervorrichtung 35 gespeichert und können mithilfe des Antriebsmotors 25 unter Kontrolle der Steuervorrichtung 35 automatisch, schnell und mit der jeweils gewünschten Genauigkeit reproduzierbar angefahren werden.

In einer Variante sind drei verschiedene vorgegebene Stellungen vorgesehen:
- In einer ersten Stellung der Reglerachse 22 (Ruhestellung) ist die Zufuhr von Milch in die Kammer 19 verschlossen und die Zufuhr von Luft in die Kammer 19 ist offen (mit maximalem Durchgang zwischen der dritten Leitung 17 und der Kammer 19).
- In einer zweiten Stellung der Reglerachse 22 (Stellung Milchschaum) ist die Zufuhr von Milch und die Zufuhr von Luft in die Kammer 19 offen (mit maximalem Durchgang zwischen der ersten Leitung 15 und der Kammer 19 und mit maximalem Durchgang zwischen der dritten Leitung 17 und der Kammer 19.
- In einer dritten Stellung der Reglerachse 22 (Stellung Milch) ist die Zufuhr von Milch gedrosselt (relativ zum maximalen Durchgang zwischen der ersten Leitung 15 und der Kammer 19) und die Zufuhr von Luft in die Kammer 19 ist geschlossen.

In einer weiteren Variante sind weitere vorgegebene Stellungen vorgesehen, welche als Zwischenstellungen bezüglich der vorstehend genannten Stellungen der Reglerachse 22 angesehen werden können. Ausgehend von der genannten dritten Stellung (Stellung Milch) können beispielsweise Zwischenstellungen definiert werden, bei denen die Zufuhr von Milch unterschiedlich stark gedrosselt ist (relativ zum maximalen Durchgang zwischen der ersten Leitung 15 und der Kammer 19). Durch eine Verstellung der Reglerachse 22 zwischen diesen Zwischenstellungen ist es möglich, Milch (ohne Zusatz von Milchschaum) auf unterschiedliche Temperaturen zu bringen.

Ausgehend von der genannten zweiten Stellung (Stellung Milchschaum) können beispielsweise Zwischenstellungen definiert werden, bei denen die Zufuhr von Luft unterschiedlich stark gedrosselt ist (relativ zum maximalen Durchgang zwischen der dritten Leitung 17 und der Kammer 19). Durch eine Verstellung der Reglerachse 22 zwischen diesen Zwischenstellungen ist es möglich, die Konsistenz des jeweils erzeugten Milchschaums durch eine Variation des relativen Anteils der mit der Milch vermischten Luft zu verändern.

Weiterhin ist es möglich, ausgehend von der genannten zweiten Stellung und der genannten ersten Stellung, Zwischenstellungen zu definieren, bei denen sowohl die Zufuhr von Milch als auch die Zufuhr von Luft unterschiedlich stark gedrosselt sind (relativ zum maximalen Durchgang zwischen der ersten Leitung 15 und der Kammer 19 bzw. relativ zum maximalen Durchgang zwischen der dritten Leitung 17 und der Kammer 19). Durch eine Verstellung der Reglerachse 22 zwischen diesen Zwischenstellungen ist es möglich, die Temperatur und die Konsistenz der jeweils erzeugten geschäumten Milch zu verändern.

Bei der Kaffeemaschine 1 sind mehreren verschiedenen Tasten 37 jeweils verschiedene vorgegebene Stellungen der Reglerachse 22 zugeordnet. Ein Benutzer der Kaffeemaschine kann deshalb durch eine Betätigung einer der Tasten 37 die jeweils gewünschte Stellung der Reglerachse 22 vorwählen und die Abgabevorrichtung 10 dazu veranlassen, Dampf, Milch und gegebenenfalls Luft entsprechend der ausgewählten Stellung der Reglerachse zu mischen.

Im Falle der Kaffeemaschine 1 ist es möglich, mittels der Steuervorrichtung 35 die Abgabe eines Kaffeegetränks zu veranlassen und die Reglerachse 22 vor, während oder nach der Abgabe des Kaffeegetränks in mindestens eine der vorgegebenen Stellungen zu bringen. Weiterhin ist die Steuervorrichtung 35 derart ausgebildet, dass die Reglerachse 22 vor, während oder nach der Abgabe des Kaffeegetränks zeitlich nacheinander in verschiedene vorgegebene Stellung bringbar ist. Diese Massnahmen erlauben es, eine grosse Vielfalt von Kaffeespezialitäten, welche Milch und/oder Milchschaum enthalten, automatisch herzustellen.

Wie Fig. 3 zeigt, ist der Antriebsmotor 25 im Innern des Gehäuses 2 der Kaffeemaschine 1 angeordnet ist, während die Mischeinrichtung 11 an der Aussenseite des Gehäuses 2 angeordnet ist. Auf diese Weise beansprucht die Abgabevorrichtung 10 besonders wenig Platz. Um eine Kopplung zwischen der Reglerachse 22 und der Antriebsachse 26 des Antriebsmotors 25 zu ermöglichen, weist das Gehäuse 2 eine Öffnung 2.1 auf, durch welche die Antriebsachse 2 in den Raum ausserhalb der Kaffeemaschine 1 ragt. Die Antriebsachse 26 ragt weiterhin in das Gehäuse 5 des Kaffeeauslaufkopfes 4 und ist deshalb innerhalb des Gehäuses 5 an die Reglerachse 22 koppelbar.

Um die Mischeinrichtung 11 entfernen zu können, muss das Gehäuse 5 geöffnet werden, beispielsweise durch Entfernen einzelner Segmente des Gehäuses 5. Anschliessend ist die Mischeinrichtung 11 frei zugänglich und kann von der Antriebsachse 22 und dem Adapter 15' getrennt und als Ganzes von der Kaffeemaschine 1 entfernt werden.

Alternativ können die Antriebsachse 26 des Antriebsmotors 25 und/oder die Reglerachse 22 und/oder ein die Antriebsachse 26 und die Reglerachse 22 verbindendes Getriebe oder eine die Antriebsachse 26 und die Reglerachse 22 verbindende Kupplung derart angeordnet sein, dass sie durch eine Öffnung im Gehäuse 2 der Kaffeemaschine 1 ragen. Gemäss einer weiteren Alternative kann der Antrieb 25 auch im Gehäuse 5 untergebracht werden, sofern der Platz im Gehäuse hierfür ausreicht.

## Patentansprüche

1. Abgabevorrichtung (10) für Milch und/oder Milchschaum, mit einer Mischeinrichtung (11) zum Mischen von Dampf, Milch und/oder Luft, welche Mischeinrichtung (11) umfasst:
a) eine Kammer (19),
b) eine erste Leitung (15) zur Zufuhr von Milch in die Kammer (19),
c) eine zweite Leitung (16) zur Zufuhr von Dampf in die Kammer (19),
d) eine dritte Leitung (17) zur Zufuhr von Luft in die Kammer (19),
e) mindestens einen Auslauf (30, 30.1) zur Abgabe von Milch und/oder Milchschaum aus der Kammer 19,
f) ein eine verstellbare Reglerachse (22) aufweisendes Ventil (21) zum Regulieren der Zufuhr der Milch und/oder der Luft in die Kammer (19), wobei durch Verstellen der Reglerachse (22) zwischen verschiedenen vorgegebenen Stellungen zumindest ein Fluss von Milch an- und abschaltbar und/oder veränderbar und ein Fluss von Luft an- und abschaltbar und/oder veränderbar ist,
**dadurch gekennzeichnet, dass**
die Abgabevorrichtung (10) einen Antriebsmotor (25) zum Verstellen der Reglerachse (22) des Ventils (21) und eine Steuervorrichtung (35) zum Steuern des Antriebsmotors (25) aufweist, wobei die Reglerachse (22) durch Steuern des Antriebsmotors (25) mittels der Steuervorrichtung (35) in die jeweiligen vorgegebenen Stellungen bringbar ist.

2. Abgabevorrichtung (10) nach Anspruch 1, wobei eine Antriebsachse (26) des Antriebsmotors (25) über eine lösbare Verbindung (23) an die Reglerachse (26) gekoppelt ist.

3. Abgabevorrichtung (10) nach Anspruch 2, wobei die Mischeinrichtung (11) nach Lösen der lösbaren Verbindung (23) als Ganzes von den übrigen Teilen der Abgabevorrichtung (10) entfernbar ist.

4. Kaffeemaschine (1) mit einem Kaffeeauslaufkopf (4) zur Abgabe eines Kaffeegetränks und einer Abgabevorrichtung (10) nach einem der Ansprüche 1-3.

5. Kaffeemaschine (1) nach Anspruch 4, wobei die Mischeinrichtung (11) der Abgabevorrichtung (10) an einer Aussenseite eines Gehäuses (2) der Kaffeemaschine (1) angeordnet ist.

6. Kaffeemaschine (1) nach Anspruch 5, wobei der Kaffeeauslaufkopf (4) an der Aussenseite des Gehäuses (2) der Kaffeemaschine (1) angeordnet ist und die Abgabevorrichtung (10) am Kaffeeauslaufkopf (4) befestigt ist.

7. Kaffeemaschine (1) nach Anspruch 6, wobei der Kaffeeauslaufkopf (4) ein Gehäuse (5) umfasst und die Mischeinrichtung (11) in diesem Gehäuse (5) untergebracht ist.

8. Kaffeemaschine (1) nach einem der Ansprüche 5 - 7, wobei die Mischeinrichtung (11) von der Aussenseite des Gehäuses (2) der Kaffeemaschine (1) her zugänglich und als Ganzes von der Kaffeemaschine (1) separierbar ist.

9. Kaffeemaschine (1) nach einem der Ansprüche 6 - 8, wobei der Kaffeeauslaufkopf (4) und die Abgabevorrichtung (10) relativ zum Gehäuse (2) der Kaffeemaschine (1) bewegbar angeordnet sind und eine Höhenlage des Kaffeeauslaufkopfes (4) und eine Höhenlage der Abgabevorrichtung (10) simultan veränderbar sind.

10. Kaffeemaschine (1) nach einem der Ansprüche 5 - 9, wobei der Antriebsmotor (25) im Innern des Gehäuses (2) der Kaffeemaschine (1) angeordnet ist und die Antriebsachse (26) des Antriebsmotors (25) und/oder die Reglerachse (22) und/oder ein die Antriebsachse (26) und die Reglerachse (22) verbindendes Getriebe oder eine die Antriebsachse (26) und die Reglerachse (22) verbindende Kupplung durch eine Öffnung (2.1) im Gehäuse (2) der Kaffeemaschine (1) ragt.

11. Kaffeemaschine (1) nach einem der Ansprüche 4 - 10, wobei mittels der Steuervorrichtung (35) die Abgabe eines Kaffeegetränks veranlassbar ist und die Reglerachse (22) vor, während oder nach der Abgabe des Kaffeegetränks in mindestens eine der vorgegebenen Stellungen bringbar ist.

12. Kaffeemaschine (1) nach Anspruch 11, wobei die Steuervorrichtung (35) derart ausgebildet ist, dass die Reglerachse (22) vor, während oder nach der Abgabe des Kaffeegetränks zeitlich nacheinander in verschiedene vorgegebene Stellung bringbar ist.

## Claims

1. Dispensing apparatus (10) for milk and/or milk froth, comprising a mixing device (11) for mixing steam, milk and/or air, which mixing device (11) comprises:
a) a chamber (19),
b) a first line (15) for supplying milk into the chamber (19),
c) a second line (16) for supplying steam into the chamber (19),
d) a third line (17) for supplying air into the chamber (19),
e) at least one outlet (30, 30.1) for dispensing milk and/or milk froth from the chamber 19,
f) a valve (21) having an adjustable regulator axis (22) for regulating the supply of milk and/or air into the chamber (19), wherein by adjusting the regulator axis (22) between various pre-defined positions at least one flow of milk can be switched on and off and/or varied and a flow of air can be switched on and off and/or varied,
**characterised in that**
the dispensing device (10) comprises a drive motor (25) for adjusting the regulator axis (22) of the valve (21) and a control apparatus (35) for controlling the drive motor (25), wherein the regulator axis (22) can be brought into the respective pre-defined positions by controlling the drive motor (25) by means of the control apparatus (35).

2. The dispensing apparatus (10) according to claim 1, wherein a drive axis (26) of the drive motor (25) is coupled to the regulator axis (26) by means of a detachable connection (23).

3. The dispensing apparatus (10) according to claim 2, wherein the mixing device (11) can be removed as a whole from the other parts of the dispensing apparatus (10) after releasing the detachable connection (23).

4. A coffee machine (1) having a coffee outlet head (4) for dispensing a coffee beverage and a dispensing apparatus (10) according to any one of claims 1-3.

5. The coffee machine (1) according to claim 4, wherein the mixing device (11) of the dispensing apparatus (10) is disposed on an outlet side of a housing (2) of the coffee machine (1).

6. The coffee machine (1) according to claim 5, wherein the coffee outlet head (4) is disposed on the outer side of the housing (2) of the coffee machine (1) and the dispensing apparatus (10) is fastened on the coffee outlet head (4).

7. The coffee machine (1) according to claim 6, wherein the coffee outlet head (4) comprises a housing (5) and the mixing device (11) is accommodated in this housing (5).

8. The coffee machine (1) according to any one of claims 5-7, wherein the mixing device (11) is accessible from the outer side of the housing (2) of the coffee machine (1) and can be separated as a whole from the coffee machine (1).

9. The coffee machine (1) according to any one of claims 6-8, wherein the coffee outlet head (4) and the dispensing apparatus (10) are disposed so that they can be moved relative to the housing (2) of the coffee machine (1) and a height position of the coffee outlet head (4) and a height position of the dispensing apparatus (10) are simultaneously variable.

10. The coffee machine (1) according to any one of claims 5-9, wherein the drive motor (25) is disposed in the interior of the housing (2) of the coffee machine (1) and the drive axis (26) of the drive motor (25) and/or the regulator axis (22) and/or a transmission connecting the drive axis (26) and the regulator axis (22) and/or a coupling connecting the drive axis (26) and the regulator axis (22) penetrates through an opening (2.1) in the housing (2) of the coffee machine (1).

11. The coffee machine (1) according to any one of claims 4-10, wherein the dispensing of a coffee beverage can be brought about by means of the control apparatus (35) and the regulator axis (22) can be brought into at least one of the pre-defined positions before, during or after the dispensing of the coffee beverage.

12. The coffee machine (1) according to claim 11, wherein the control apparatus (35) is configured in such a manner that the regulator axis (22) can be brought successively in time into various pre-defined positions before, during or after the dispensing of the coffee beverage.

## Revendications

1. Dispositif de distribution (10) de lait ou de mousse de lait, avec un système mélangeur (11) pour mélanger de la vapeur, du lait et/ou de l'air, lequel système mélangeur (11) comprend :
a) une chambre (19),
b) un premier conduit (15) pour alimenter du lait dans la chambre (19),
c) un deuxième conduit (16) pour alimenter de la vapeur dans la chambre (19),
d) un troisième conduit (17) pour alimenter de l'air dans la chambre (19),
e) au moins un orifice d'écoulement (30, 30.1) pour distribuer du lait ou de la mousse de lait hors de la chambre (19),
f) une soupape (21) comportant un axe de régulation réglable (22) pour la régulation de l'alimentation du lait et/ou de l'air dans la chambre (19), par réglage de l'axe de régulation (22) entre différentes positions prédéfinies, au moins un flux de lait pouvant être déclenché et arrêté et/ou varié,
**caractérisé en ce que**
le dispositif de distribution (10) comporte un moteur d'entraînement (25) pour le réglage de l'axe de régulation (22) de la soupape (21) et un dispositif de commande (35) pour commander le moteur d'entraînement (25), par commande du moteur d'entraînement (25) au moyen du dispositif de commande (35), l'axe de régulation (22) pouvant être amené dans les positions prédéfinies respectives.

2. Dispositif de distribution (10) selon la revendication 1, un axe d'entraînement (26) du moteur d'entraînement (25) étant couplé à l'axe de régulation (26) par l'intermédiaire d'une liaison amovible (23).

3. Dispositif de distribution (10) selon la revendication 2,
après désolidarisation de la liaison amovible (23), le système mélangeur (11) pouvant être retiré en tant qu'unité des autres parties du dispositif de distribution (10).

4. Machine à café (1) avec une tête d'écoulement du café (4) pour distribuer une boisson au café et avec un dispositif de distribution (10) selon l'une quelconque des revendications 1 à 3.

5. Machine à café (1) selon la revendication 4, le système mélangeur (11) du dispositif de distribution (10) étant disposé sur une face extérieure d'un boîtier (2) de la machine à café (1).

6. Machine à café (1) selon la revendication 5, la tête d'écoulement du café (4) étant disposée sur la face extérieure du boîtier (2) de la machine à café (1) et le dispositif de distribution (10) étant fixé sur la tête d'écoulement du café (4).

7. Machine à café (1) selon la revendication 6, la tête d'écoulement du café (4) comprenant un boîtier (5) et le système mélangeur (11) étant logé dans ledit boîtier (5).

8. Machine à café (1) selon l'une quelconque des revendications 5 à 7, le système mélangeur (11) étant accessible à partir de la face extérieure (2) de la machine à café (1) et étant séparable en tant qu'unité de la machine à café (1).

9. Machine à café (1) selon l'une quelconque des revendications 6 à 8, la tête d'écoulement du café (4) et le dispositif de distribution (10) étant disposés en étant mobiles par rapport au boîtier (2) de la machine à café (1) et une position en hauteur de la tête d'écoulement du café (4) et une position en hauteur du dispositif de distribution (10) étant simultanément variables.

10. Machine à café (1) selon l'une quelconque des revendications 5 à 9, le moteur d'entraînement (25) étant disposé à l'intérieur du boîtier (2) de la machine à café (1) et l'axe d'entraînement (26) du moteur d'entraînement (25) et/ou l'axe de réglage (22) et/ou une transmission reliant l'axe d'entraînement (26) et l'axe de réglage (22) ou un accouplement reliant l'axe d'entraînement (26) et l'axe de réglage (22) saillant à travers l'ouverture (2.1) dans le boîtier (2) de la machine à café (1).

11. Machine à café (1) selon l'une quelconque des revendications 4 à 10, la distribution d'une boisson au café pouvant être déclenchée au moyen du dispositif de commande (35) et l'axe de réglage (22) pouvant être amené dans au moins l'une des positions prédéfinies avant, pendant ou après la distribution de la boisson au café.

12. Machine à café (1) selon la revendication 11, le dispositif de commande (35) étant conçu de sorte que l'axe de réglage (22) puisse être amené consécutivement dans le temps dans différentes positions prédéfinies avant, pendant ou après la distribution de la boisson au café.
